# NEUE EUROPÄISCHE PATENTSCHRIFT

(11) **EP 0 194 451 B2**
(45) Veröffentlichungstag und Bekanntmachung des Hinweises auf die Entscheidung über den Einspruch: **02.03.1994**
(45) Hinweis auf die Patenterteilung: 28.11.1990
(21) Anmeldenummer: 86101658.2
(22) Anmeldetag: 10.02.1986
(51) Int. Cl.: B29C 45/17

(54) **Horizontale Formschliesseinheit einer Kunststoff-Spritzgiessmaschine**
Horizontal mould closing unit for a plastic material injection-moulding machine
Dispositif de fermeture de moule horizontal pour machine de moulage par injection de matière plastique

(30) Priorität: 13.03.1985 DE 3508867
(43) Veröffentlichungstag der Anmeldung: 17.09.1986
(73) Patentinhaber: Hehl, Karl, 72290 Lossburg (DE)
(72) Erfinder: Hehl, Karl, 72290 Lossburg (DE)
(74) Vertreter: Reinhardt, Harry

(56) Entgegenhaltungen:
- EP-A- 0 092 686
- EP-A- 0 111 570
- EP-A- 0 164 062
- DE-A- 2 332 205
- DE-A- 3 328 290
- US-A- 4 449 907
- US-A- 4 462 783
- US-A- 4 520 919
- SHEET METAL INDUSTRIES, Band 58, Nr. 4, April 1981, Seiten 282,283, London, GB; "Equipment for rapid changing of dies"
- PATENT ABSTRACTS OF JAPAN, Band 4, Nr. 108 (M-24)[590], 5. August 1980, Seite 128 M 24; & JP-A-55 67 428 (KOBE SEIKOSHO K.K.) 21-05-1980
- Druckschrift Fa. WERNER + KOLB Werkzeugmaschinen GmbH "Transfercenter TC630, TC1000 Das neue Kompakt Konzept" (Nov. 1984)

## Beschreibung

Die Erfindung bezieht sich auf eine Formschließeinheit entsprechend dem Oberbegriff des Patentanspruches 1.

Bei einer bekannten Formschließeinheit dieser Art (DE 32 42 169 C2) ist die Spritzgießform mit Hilfe einer in der Transportbahn verschieblich gelagerten Kupplungsstange mit der Transportkette kuppelbar. Letztere ist im Bereich zwischen dem Formspannraum der Formschließeinheit und dem Wechseltisch in einer horizontalen Ebene, also bei vertikaler Achse ihrer Umienkräder angeordnet. Beim Kupplungsvorgang schieben sich die Mitnehmer der Transportkette in deren Umlenkbereich seitlich je in eine horizontale Quernut der Kupplungsstange ein. Die Kupplungsstange ist ihrerseits für eine Kupplungsverbindung mit der Spritzgießform mit Mitnehmerzapfen versehen, die von unten in entsprechende Bohrungen des Gießformkörpers eintauchen. Dabei liegt das Gleitlager für die Kupplungsstange notwendigerweise im Bereich des Formspannraumes, wodurch der Zugang zu diesem Formspannraum eingeschränkt ist. Es ist auch bekannt, Spritzgießformen mit Anlageplatten zu versehen, welche den quaderformigen Gießformkörper an beiden Stirnseiten überragen (DE-OS 23 32 205; DE-GM 1 965 313; Europäische Patentanmeldung 0 092 686 A1). Dabei wird jedoch die Versorgung z.B. mit Kühlmittel bezweckt. Es ist zudem (aus der EP-A-0 111 570) bekannt, eine Spritzgießform aus ihrer Arbeitsposition im Spannraum einer Spritzgießmaschine mittels einer 'Schlangenkette' auf einen Wechseltisch mit zwei Stellplätzen zu transportieren und umgekehrt. Dabei wird das rückseitige freie Ende der Stirnseitig am Gießformkörper angreifenden Schlangenkette in einem Behältnis versenkt bzw. aus diesem ausgezogen.

Aus dem Prospekt "Transfer-Center TC 630 TC 800 TC 1000" der Werner & Korb Werkzeugmaschinen GmbH, Werk Fritz Werner, Berlin, ist schließlich ein Werkstückträger-Wechselsystem für Fertigungssysteme für Bohr- und Fräsbearbeitung bekannt. Dieses dient der Überführung von Werkstückpaletten aus Werkstückpalettenabstellplätzen in ein Bearbeitungszentrum des Fertigungssystems mittels eines Palettentransportfahrzeuges über einen stationären Palettenaufnahmetisch. Dabei werden zwar endlose Transportketten mit je einem Mitnehmer eingesetzt, der zur Herstellung einer Mitnahmekupplung zeitweise in Nuten der Palette eingreift. Die Nuten jeder Palette sind jedoch mit Bezug auf die Transportrichtung der Palette seitlich gegeneinander versetzt angeordnet. Aus diesem Grunde ist es bei dem bekannten Wechselsystem prinzipiell nicht möglich, den Transport der Palette ohne Richtungsumkehr, ohne Leerlauf und ohne zeitweise Entkupplung der Transportkette zu bewerkstelligen.

Aufgabe der Erfindung ist es, eine Formschließeinheit der genannten Gattung derart weiterzubilden, daß eine vom Depot kommende, hinter dem Wechseltisch in Höhe ihrer späteren Arbeitsstellung positionierte Spritzgießform von der Transportkette der Gießform-Wechselvorrichtung unmittelbar erfaßt und und zwecks Vorwärmung in eine Vorwärmposition auf den Wechseltisch gebracht, sowie zwecks Überführung auf einen Transporttisch (27) über eine Strecke transportiert werden kann, die doppelt so lang ist wie der Transportweg der Spritzgießform vom Wechseltisch in den Spannraum der Formschließeinheit in Arbeitsposition, ohne daß für den Kupplungseingriff der Transportkette am Gießformkörper Veränderungen erforderlich sind.

Diese Aufgabe wird durch die im Patentanspruch 1 genannten Merkmale gelöst.

Bei einer solchen Ausbildung ist der untere Eingang bzw. Ausgnag in den bzw. aus dem Formspannraum der Formschließeinheit weitgehend frei von antreibenden Organen der Form Wechselvorrichtung, insbesondere von dem Gleitbett einer Kupplungsstange. Dadurch wird der Einbau bzw. Anbau von Sondereinrichtungen (z.B. Einrichtungen für die Handhabung von Kernen oder für das Separieren von Spritzlingen von ihren Angüssen) wesentlich erleichtert. Die Form Wechseleinrichtung ist einfacher gestaltet, weil die Transportkette unmittelbar mit der Spritzgießform gekuppelt werden kann. Zudem kann der Bedarf an unterschiedlich großen Spritzgießformen dadurch abgedeckt werden, daß unterschiedlich große Gießformkörper mit gleich großen, also standardisierten Anlageplatten kombiniert werden. Auf diese Weise sind Spritzgießformen mit unterschiedlich großen Gießformkörpern ohne Änderung an diesen Gießformkörpern in einer normierten Form-Wechselvorrichtung einsetzbar.

Dabei kann die Transportkette mit einer Spritzgießform in oder außer Kupplungseingriff gebracht werden, welche z.B.. auf einem Transporttisch unmittelbar hinter dem Wechseltisch herangefahren wurde, wenn ein Mitnehmer der Transportkette mit einer vorgeren Quernut der Spritzgießform in Schließrichtung der Formschließeinheit fluchtet. Zur lagegerechten Herstellung des Kupplungseingriffes wird die Transportbewegung des Transportisches abgestoppt, wenn sich die Quernut mit ihrem Eingangsabschnitt über dem Mitnehmer befindet. Bei Lösung des Kupplungseingriffes gelangt der von der Quernut übergriffene Mitnehmer durch die Transportbewegung des Transporttisches aus dem Bereich der Quernut und damit außer Kupplungseingriff. Insoweit stellt die Quernut zugleich einen Freiweg dar, der eine Transportbewegung des Transporttisches auch dann zuläßt, wenn ein Mitnehmer der Transportkette mit der Quernut fluchtet.

Beim Gießformwechsel zieht die Transportkette zunächst eine Spritzgießform vom Transporttisch auf einen Stellplatz des Wechseltisches, der neben der seitlichen Verlängerung des Formspannraumes der Formschließeinheit liegt, um für den nachfolgenden Arbeitseinsatz vorgewärmt zu werden (Vorwärmposition). Beim nachfolgenden eigentlichen Gießformwechsel wird die vorgewärmte Spritzgießform durch eine begrenzte Wechseltischverschiebung in den Bereich der seitlichen Verlängerung des Formspannraumes gebracht, um - nach zwischenzeitlicher Herausnahme der auszuwechselnden Gießform aus dem Formspannraum - in diesen eingeschoben zu werden. Der Transportweg der Spritzgießform vom Transporttisch zum Spannraum ist also in zwei, um den Verschiebeweg des Wechseltisches gegeneinander versetzte Wegabschnitte aufgeteilt. Dennoch erfolgt die beschriebene Überführung der Spritzgießform vom Transporttisch in den Spannraum ohne Wechsel der Kettenlaufrichtung bei ständig aufrecht erhaltener Kupplung zwischen Transportkette und Spritzgießform.

Eine exakte Steuerung des Laufes der Transportketten in kritische Stopp-Positionen der Spritzgießform ist bei einer Ausbildung entsprechend den Patentansprüchen 9-13 sichergestellt.

Nachstehend wird die Erfindung anhand der Zeichnung an einem Ausführungsbeispiel erläutert. Es zeigen:
Fig. 1 die zur Formschließeinheit zugehörige Spritzgießform in perspektivischer Darstellung,
Fig. 2 einen Schnitt nach Linie II-II von Fig. 1,
Fig. 3 einen Ausschnitt aus der Formschließeinheit im Bereich der Form-Wechselvorrichtung in Draufsicht,
Fig. 4 einen Schnitt nach Linie IV-IV von Fig. 3,
Fig. 5 einen Schnitt nach Linie V-V von Fig. 3 in vergrößerter Darstellung,
Fign. 6-9 Ausschnitte aus dem Wechseltisch im Bereich einer Transportkette bei unterschiedlicher Transportposition der Spritzgießform in Draufsicht,
Fig. 10 einen Schnitt nach Linie X-X von Fig. 7,
Fig. 11 einen Schnitt nach Linie XI-XI von Fig. 7,
Fig. 12 einen Ausschnitt aus dem Wechseltisch im Bereich der aus Fig. 11 ersichtlichen Anschläge bei Blickrichtung vom Transporttisch.

Die Spritzgießform S, S' umfaßt einen aus genormten Platten zusammengesetzten, quaderförmigen Gießformkörper 40 und zwei diesen Gießformkörper 40 je spannseitig begrenzende Analgeplatten 41 von rechteckigem Grundriß. Die

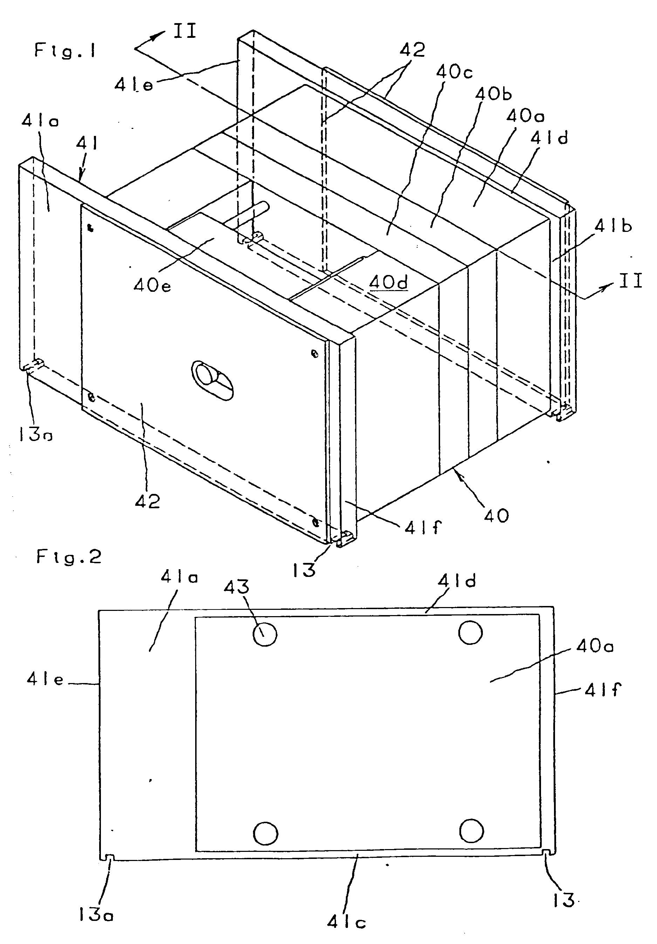

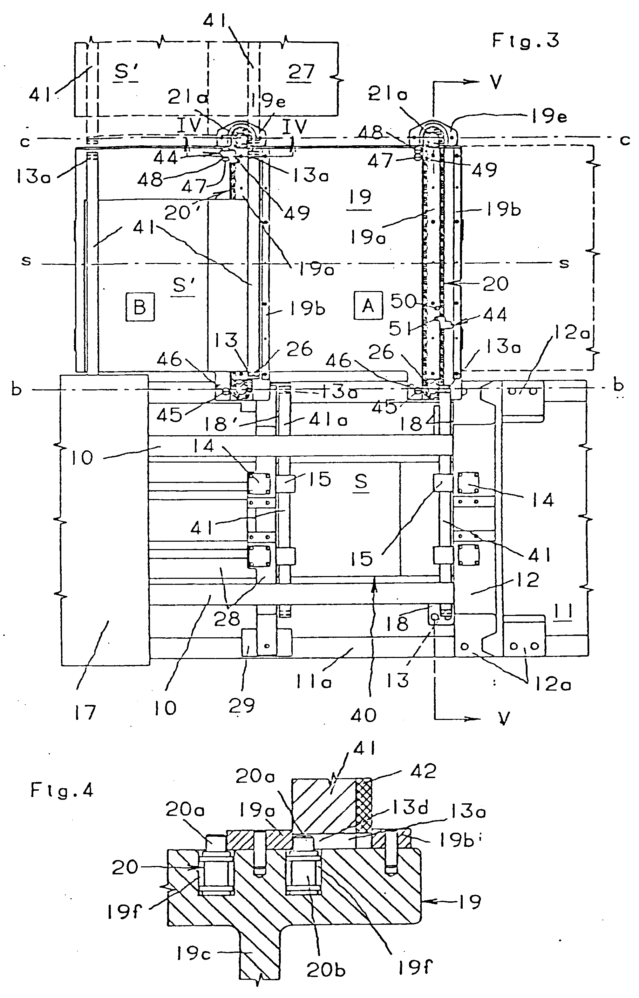

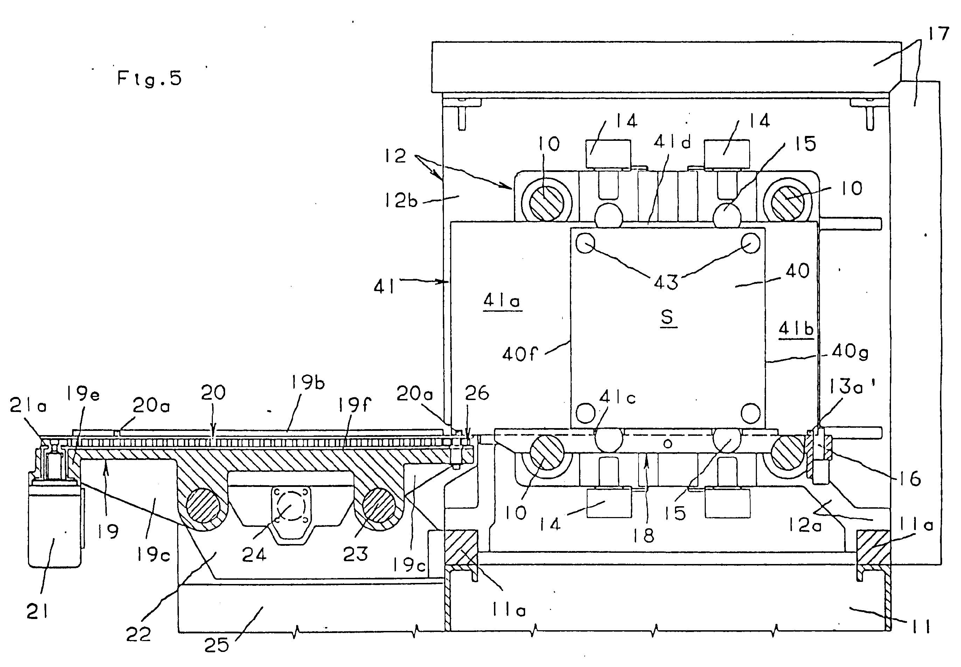

Anlageplatten 41 sind mit Hilfe von Zentrierbolzum 43 am Gießformkörper 40 befestigt und insoweit integrierende Bestandteile desselben. Sie sind spannseitig je mit einer isolierenden Platte (Isolierplatte 42) armiert. Die Anlageplatten 41 überragen den Gießformkörper 40 auf allen Seiten, wie insbesondere aus Fig. 2 ersichtlich. Der den Gießformkörper 40 nach unten überragende Bereich (Führungsbereich 41c in Fig. 1, 2) dient der Führung der Spritzgießform S, S' zwischen Führungsleisten 19a, 19b des Wechseltisches 19 bzw. des Transporttisches 27. Im Formspannraum gleitet oder rollt die Spritzgießform S,S' auf Stützelementen 18, 18', die an den Formträgern 12, 28 befestigt sind. Beide Anlageplatten 41 sind im Führungsbereich 41c mit zwei nach außen offenen, in Schließrichtung der Formschließeinheit verlaufenden, durchgehenden (Quernuten 13, 13a) von rechteckigem Querschnitt versehen. Der den Gießformkörper 40 weit nach hinten überragende Bereich (Kupplungsbereich 41a) der Anlageplatten 41 ermöglicht eine Verlegung der hinteren Quernuten 13a der in Arbeitsposition befindlichen Spritzgießform S, S' in den Bereich der Transportkette 20, 20' für einen Kupplungseingriff des Mitnehmers 20a; 20a'. Die Führungsbereiche 41c und die den Gießformkörper 40 nach oben überragenden Bereiche (Spannbereiche 41d) dienen dem Festspannen der Gießformhälften auf den Formträgern 12, 28 mittels Spannbolzen 15, die von hydraulischen Zylindern 14 steuerbar sind. Die Spannbolzen 15 hintergreifen die Anlageplatten 41 in den genannten Bereichen mittels Spannasen, wie insbesondere aus Fig. 5 in Verbindung mit Fig. 3 erkennbar. Die Quernuten 13, 13a jeder Anlageplatte 41 befinden sich in einem Abstand voneinander, der kürzer ist als der Transportweg der Spritzgießform S, S' vom Stellplatz A oder B des Wechseltisches 19 in Arbeitsposition. Die Quernuten 13, 13a befinden sich je in unmittelbarer Nähe einer Vertikalen Stirnkante 41e bzw. 41f der betreffenden Anlageplatte 41. Der bewegbare Formträger 28 ist an Säulen 10 geführt und über Stützorgane 29 auf Führungsschienen 11a des Maschinenfußes 11 abgestützt. Der stationäre Formträger 12 ruht über Auflagerippen 12a brückenartig auf den Führungsschienen 11a. Eine Schutzabdeckung 17 deckt die Antriebseinrichtung für den bewegbaren Formträger 28 ab. Neben dem Formspannraum ist der Wechseltisch 19 in Schließrichtung wenigstens um eine Formhöhe auf Führungssäulen 23 nach zwei Seiten beidseits einer seitlichen Verlängerung des Formspannraumes mittels einer Antriebshydraulik 24 verschiebbar. Ein die Führungssäulen 23 aufnehmendes Lagerstück 22 ist an der benachbarten Führungsschiene 11a befestigt und auf einer Konsole 25 abgestützt. Auf dem Wechseltisch 19 sind Transportketten 20, 20' mit vertikalen Achsen der Kettenräder 21a, 26 etwa symmetrisch zu der in Schließrichtung verlaufenden Symmetrieebene s-s des Wechseltisches 19 angeordnet. Die Transportketten 20, 20' überragen die Längsseiten des Wechseltisches 19 im Bereich der Kettenräder 21a, 26. Das antreibende Kettenrad 21a sitzt auf der vertikalen Achse eines koaxialen Antriebsmotors 21, der in einer Aufnahme 19e des Wechseltisches 19 gelagert ist. Die Transportketten 20, 20' begrenzen die Stellplätze A und B auf der rechten Seite derart, daß das rechte Trumm der Transportkette 20 oder 20' unter eine Anlageplatte 41 zu liegen kommt. Die Transportketten sind in Nuten 19f des Wechseltisches versenkt. Ihre zapfenartigen Mitnehmer 20a, 20a' überragen die Stellflächen der Stellplätze A und B nach oben. Die Mitnehmer 20a; 20a' sind durch Verlängerungen von Gelenkbolzen 20b der Transportkette 20 bzw. 20' gebildet. Bei Kupplungseingriff liegt mindestens ein Mitnehmer 20a, 20a' in einem Eingangsabschnitt 13d einer Quernut 13 oder 13a. Die Länge dieses Eingangsabschnittes 13d beträgt etwa ein Drittel der Gesamtlänge der Quernut 13 bzw. 13a (Fig. 4).

Die quer zur Schließrichtung abgenommenen Abmessungen von Wechseltisch 19 und Anlageplatte 41 sind derart gewählt, daß die hinteren Quernuten 13a einer auf einem der Stellplätze A oder B abgestellten Spritzgießform S bzw. S' gerade noch innerhalb der rechteckigen Grundfläche des Wechseltisches 19 und die vorderen Quernuten 13 noch außerhalb dieser Grundfläche liegen. Die vertikalen Achsen der passiven Kettenräder 26 der Transportketten 20, 20' fluchten etwa mit den hinteren Quernuten 13a der in Arbeitsposition befindlichen Spritzgießform S. Die genannten Achsen und Quernuten liegen somit in einer gemeinsamen, parallel zur Schließrichtung liegenden Ebene b-b. Die vorderen Quernuten 13 einer auf einem Transporttisch 27 abgestellten Spritzgießform S oder S' liegen mit den vertikalen Achsen der antreibenden Kettenräder 21a in einer gemeinsamen Ebene c-c. Dieser Transporttisch 27 ist parallel zur Schließrichtung der Formschließeinheit führbar und dient als Spritzgießform-Transporter.

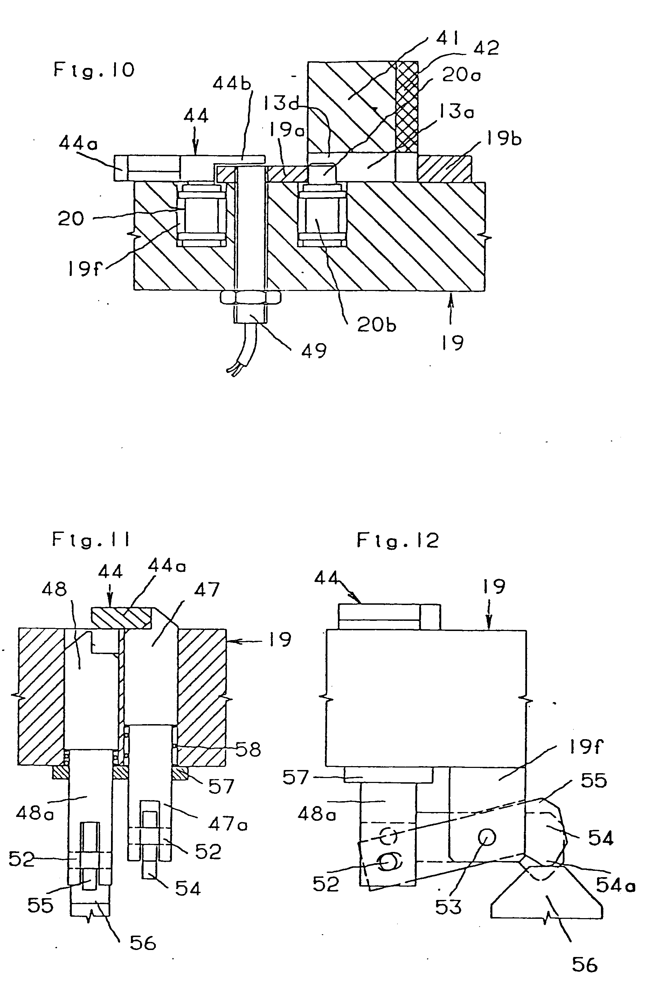

Der Lauf der Transportketten 20, 20' ist mittels eines an jeder dieser Transportketten befestigten Steuerelementes 44 steuerbar. Durch Steuerlappen 44a, 44b des Steuerelementes 44 sind Stopp-Schalter 46; 49; 50; 51 des Wechseltisches 19 betätigbar. Anschlagkanten 44b des Steuerelementes 44 sind an Anschlägen 45; 47; 48 des Wechseltisches 19 zur exakten Festlegung von Stopp-Positionen der Transportkette anlegbar. Die Stopp-Schalter 46; 49 und die Anschläge 45; 47; 48 sind derart am Wechseltisch 19 angeordnet, daß der Steuerlappen 44a bzw. 44b über einen als Stopp-Schalter 46 bzw. 49 den Lauf der Transporkette 20, 20' abstoppt (Stopp-Position) und daß zugleich die Anschlagkante 44c an einem Anschlag 45; 47; 48 anliegt, wenn ein Mitnehmer 20a bzw. 20a' der Quernut 13 bzw. 13a mit einer auf dem Transporttisch 27 befindlichen Spritzgießform S, S' fluchtet oder wenn die Spritzgießform S, S' ihre Vorwärm-Position auf dem Wechseltisch 19 erreicht hat. Die Anschläge 47; 48 sind in Abhängigkeit von der in Schließrichtung der Formschließeinheit erfolgenden Verschiebung des Wechseltisches 19 mittels einer Nockensteuerung (Fig. 11, 12) in bzw. außer Arbeitsposition überführbar. Wie insbesondere aus Fig. 10 erkennbar, sind die den Wechseltisch 19 vertikal durchsetzenden Stopp-Schalter 49; 50; 51 vom Steuerlappen 44b induktiv schaltbar. Die Anschläge 47; 48 sind vertikal verschiebbar im Wechseltisch 19 gelagert, wie insbesondere aus Fig. 11 ersichtlich. Diese Anschläge sind mittels der Nockensteuerung im Zusammenwirken mit einer auf einer Platte 57 abgestützten Feder zeitgerecht in bzw. außer Arbeitsposition geführt. Die Nockensteuerung umfaßt stationäre Nocken 56 des Wechseltisches 19 und mittels Schwenkachsen 53 im Wechselstisch 19 gelagerte zweiarmige Hebel, die mittels Achsen 52 an Schäften (z.B. 47a, 48a) der Anschläge (z.B. 47, 48) angelenkt sind. Jeder Anschlag 47; 48 ist von einem zugehörigen Nocken 56 über einen zugehörigen Hebel 54 gesteuert.

Die Formwechselvorrichtung der Formschließeinheit arbeitet wie folgt:

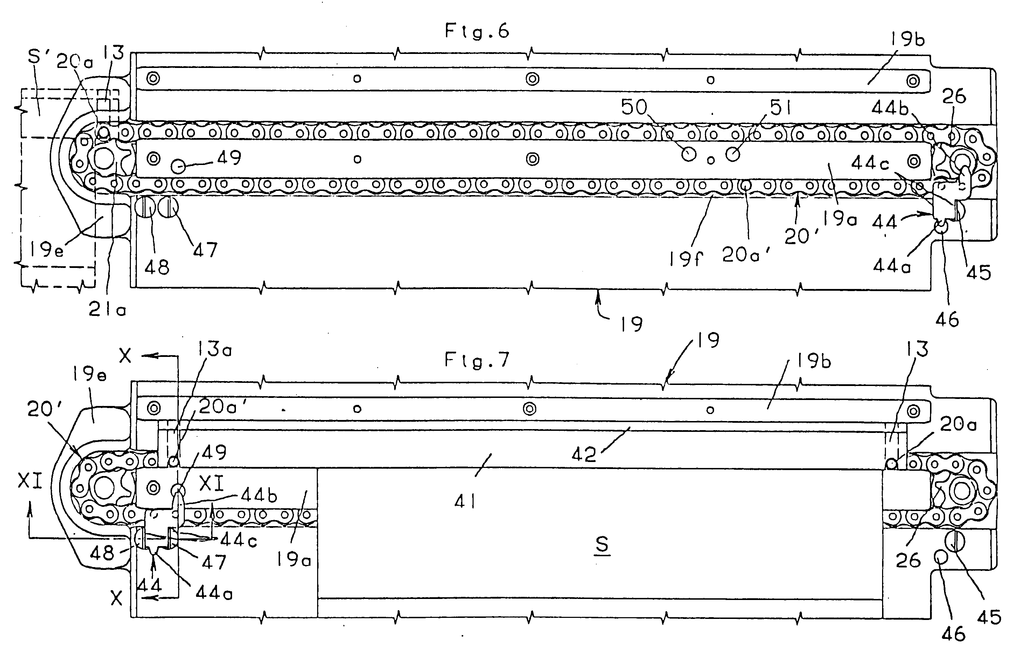

Die umlaufende Transportkette 20' wird mittels des Schaltlappens 44a über den Stoppschalter 46 in einer Stopp-Position entsprechend Fig. 6 abgestoppt und in dieser Position durch Anlage einer Anschlagkante 44c am Anschlag 45 exakt gesichert. Danach wird der Transporttisch 27 mit einer aus dem Depot kommenden Spritzgießform S' (dort in gestrichelter Linienführung dargestellt) in eine Position gemäß Fig. 6 bzw. Fig. 4 gefahren. Dabei gelangt die vordere Quernut 13 dieser Spritzgießform S' durch teilweises Überfahren eines mit dieser Quernut 13 in Schließrichtung fluchtenden Mitnehmers 20a der stillstehenden Transportkette 20' in Kupplungseingriff (Fig. 6 bzw. 4). Danach zieht die in Lauf gesetzte Transportkette 20' die Spritzgießform S' zwecks Vorwärmung auf den Stellplatz B (Vorwärmposition) des Wechseltisches 19. Wie aus Fig. 7 ersichtlich, wird diese Transportbewegung bei Erreichen der Vorwärmposition dadurch abgestoppt, daß der Schaltlappen 44b über den Stoppschalter 49 gelangt. Die Vorwärmposition ist dadurch gesichert, daß eine Anschlagkante 44c am Anschlag 48 anliegt. In Vormwärmposition bleibt der Mitnehmer 20a in Eingriffstellung, während ein weiterer Mitnehmer 20a' im Verlauf der Transportbewegung im Gefolge seiner kreisbogenförmigen Bewegung am antreibenden Umlenkrad 21a in die hintere Quernut 13a seitlich eingeschoben wird, so daß sich in diesem Transportstadium zwei Mitnehmer 20a, 20a' im Kupplungseingriff befinden.

Die auszuwechselnde, in Arbeitsposition befindliche Spritzgießform S wird mit Hilfe der Transportkette 20 aus dem Form-Spannraum auf den Stellplatz A des Wechseltisches 19 gezogen. Diese Transportbewegung beginnt in einer Ausgangsposition entsprechend Fig. 9 und wird in einer Position entsprechend Fig. 7 dadurch abgestoppt, daß ein Schaltlappen 44b den Stoppschalter 49 schaltet. Die Stopp-Position wird dadurch gesichert, daß sich eine Anschlagkante 44c am Anschlag 47 anlegt.

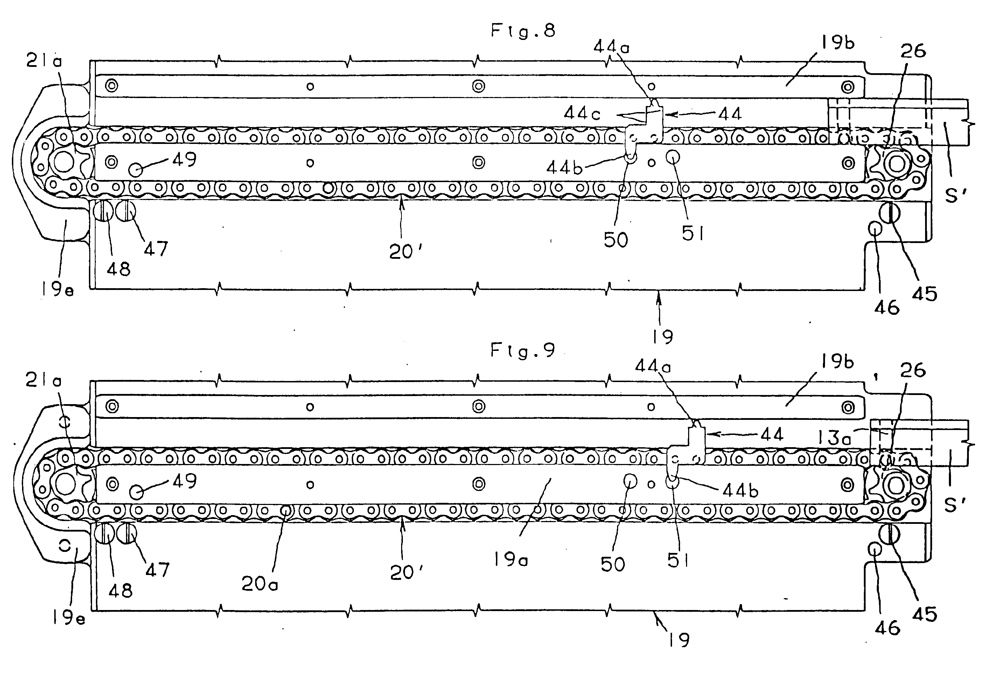

Danach wird der Wechseltisch 19 mit beiden Spritzgießformen S' und S derart nach rechts verschoben, daß sich die Spritzgießform S' auf dem Stellplatz B unmittelbar neben dem Spannraum der Formschließeinheit und die Spritzgießform S rechts davon auf dem Stellplatz A befindet. Dabei werden die Anschläge 47, 48 mit Hilfe der stationären Nocken 56 wechselweise in oder aus Arbeitsposition gesteuert. Danach wird die Spritzgießform S' mit Hilfe der Transportkette 20, 20' in eine Position gemäß Fig. 8 überführt und dabei mit Hilfe des Schaltlappens 44b durch den Stoppschalter 50 abgestoppt. Diese Stopp-Position ermöglicht eine zeitgerechte Kupplung des Auswerfers mit seinem Antrieb.

Danach gelangt die Spritzgießform S' im Zuge einer weiteren Transportbewegung in den Spannraum in Arbeitsposition, die mittels des Schaltlappens 44b durch den Stoppschalter 51 abgestoppt wird (Fig. 9). Am Ende dieser Transportbewegung legt sich die Spritzgießform S' an den mechanischen Anschlag 16 an.

Die Spritzgießform S wird vom Stellplatz A mit Hilfe der Transportkette 20 auf den Transporttisch 27 geschoben. Die von einer Position entsprechend Fig. 7 ausgehende Transportbewegung wird mittels des Schaltlappens 44a durch den Stoppschalter 46 in einer Position gemäß Fig. 6 abgestoppt und in der Stopp-Position durch Anlage einer Anschlagkante 44c am Anschlag 45 exakt gesichert. Die Spritzgießform kann dann mit Hilfe des in Schließrichtung geführten Transporttisches 27 ins Depot gefahren werden.

Die Eingriffspositionen der Mitnehmer 20a; 20a' in den Quernuten 13 und/oder 13a entsprechen sich also in allen Stopp-Positionen der Figuren 6-9 unabhängig davon, ob diese im Verlauf einer Transportbewegung vom Transporttisch 27 in Arbeitsposition oder aus der Arbeitsposition auf den Transporttisch 27 in gegensätzlicher Richtung erreicht werden.

Der Formschließeinheit ist ein Satz von Spritzgießformen unterschiedlicher Größe zugeordnet. Die Gießformkörper dieser Spritzgießformen, welche eine entsprechend unterschiedliche Größe aufweisen, sind mit Anlageplatten gleicher Größe versehen.

## Patentansprüche

1. Horizontale Formschließeinheit einer Kunststoff-Spritzgießmaschine, mit einer automatischen Form-Wechselvorrichtung sowie zugehöriger Spritzgießform (S; S'), mit einem aus genormten Platten zusammengesetzten Gießformkörper, der spannseitig von je einer Anlageplatte begrenzt ist, welche die Stirnseiten des Gießformkörpers überragt, und mit Kupplungsorganen an der Unterseite der Spritzgießform sowie mit einem in Schließrichtung wenigstens um eine Formhöhe in Führungen nach zwei Seiten beidseits der seitlichen Verlängerung des Formspannraums der Formschließeinheit verschiebbaren Wechseltisch mit zwei Stellplätzen (A; B) von welchem die auf einem dieser Stellplätze (A;B) in einer Vorwärmposition vorwärmbare Spritzgießform mit Hilfe einer von unten über die Kupplungsorgane an ihr angreifenden, endlosen Transponkette auf einer Transportbahn in den Formspannraum bewegbar ist, dadurch gekennzeichnet, daß zwei Transportketten (20; 20') je mit antreibendem Kettenrad (21a) und passivem Kettenrad (26) derart auf dem Wechseltisch (19) angeordnet sind, daß sie sich etwa symmetrisch beidseits der in Schließrichtung der Formschließeinheit verlaufenden Längsachse (Symmetrieebene s-s) des Wechseltisches (19) erstrecken und die beiden Stellplätze (A; B) je auf einer gleichen Seite begrenzen und daß Kupplungsorgane (Quernuten 13; 13a) an wenigstens einer Anlageplatte (41) in dem die Stirnseite des Gießformkörpers (40) überragenden Bereich angeordnet sind, mit welchen Kupplungsorganen sich Mitnehmer (20 a,20a') der Transportketten (20;20') bei in Vorwärmposition gezogener Spritzgießform (S;S') gleichzeitig im Kupplungseingriff befinden, wobei der Formwechselvorrichtung ein parallel zur Schließrichtung führbarer Transporttisch (27) zugeordnet ist, und wobei die Anlageplatten (41) bei im Spannraum befindlicher Spritzgaßform (S,S') in den Bereich der Transportkette (20,20') für einen Kupplungseingriff des Mitnehmers (20a, 20a') hineinragen.

2. Formschließeinheit nach Patentanspruch 1, dadurch gekennzeichnet, daß für die Stellplätze (A; B) des Wechseltisches (19) zwei dessen Längsseiten überragende, identische Transportketten (20; 20') angeordnet sind, wobei die Stirnseiten des Gießformkörpers (40) beidseits überragenden Anlageplatten (41) mit je einer in unmittelbarer Nähe ihrer beiden vertikalen Stirnkanten (41e, 41f) angeordneten Quernut (13; 13a) versehen sind.

3. Formschließeinheit nach Patentanspruch 1, dadurch gekennzeichnet, daß die bei vertikaler Achse umlaufenden Kettenräder (21a; 26) der je mit zwei Mitnehmern (20a) versehenen Transportketten (20; 20') je außerhalb der Grundfläche des Wechseltisches (19) angeordnet sind.

4. Formschließeinheit nach einem der vorhergehenden Patentansprüche, dadurch gekennzeichnet, daß der Abstand zwischen den Quernuten (13; 13a) einer Anlageplatte (41) geringer ist als der für die Überführung der Spritzgießform (S; S') vom Wechseltisch (19) in Arbeitsposition erforderliche Transportweg.

5. Formschließeinheit nach einem der vorhergehenden Patentansprüche, gekennzeichnet durch eine solche Bemessung der Breite des Wechseltisches (19) und der Länge der Anlageplatten (41), daß die hinteren Quernuten (13a) einer auf dem Stellplatz (A; B) abgestellten Spritzgießform (S; S') gerade noch innerhalb der Grundfläche des Wechseltisches (19) und die vorderen Quernuten (13) gerade noch außerhalb dieser Grundfläche liegen.

6. Formschließeinheit nach einem der vorhergehenden Patentansprüche 2-5, dadurch gekennzeichnet, daß die Achsen der passiv umlaufenden Kettenräder (26) der Transportketten (20; 20') und die hinteren Quernuten (13a) der in Arbeitsposition im Formspannraum befindlichen Spritzgießform (S in Fig. 3) etwa in einer gemeinsamen, parallel zur Schließrichtung der Formschließeinheit liegenden Ebene (b-b) angeordnet sind.

7. Formschließeinheit nach einem der vorhergehenden Patentansprüche, dadurch gekennzeichnet, daß der Transporttisch (27) mit zwei Stellplätzen versehen ist und daß die vorderen Quernuten (13) einer auf dem linken Stellplatz des Transporttisches (27) abgestellten Spritzgießform (S') mit den Achsen der antreibenden Kettenräder (21a) etwa in einer gemeinsamen Ebene (c-c) liegen (Fig. 3).

8. Formschließeinheit nach einem der vorhergehenden Patentansprüche, dadurch gekennzeichnet, daß die zapfenförmigen Mitnehmer (20a; 20a') der als Gelenkketten ausgebildeten Transportketten (20, 20') durch verlängerte Gelenkbolzen gebildet sind, die sich bei Kupplungseingriff je im Eingangsabschnitt (13d in Fig. 4) einer Quernut (13, 13a) befinden.

9. Formschließeinheit nach einem der vorhergehenden Patentansprüche, dadurch gekennzeichnet, daß der Lauf der Transportketten (20, 20') mittels eines an ihr befestigten Schaltelementes (44) steuerbar ist, durch dessen Steuerlappen (44a, 44b) Stoppschalter (46; 49; 50; 51) des Wechseltisches (19) betätigbar und dessen Anschlagkanten (44c) an Anschlägen (45; 47; 48) des Wechseltisches zur exakten Festlegung der Stopp-Positionen der Transportkette (20, 20') anlegbar sind.

10. Formschließeinheit nach Patentanspruch 9, gekennzeichnet durch eine derartige Anordnung der Stopp-Schalter (46; 49) und der Anschläge (45; 47; 48), daß ein Schaltlappen (44a, 44b) über einen Stopp-Schalter (46; 49) den Lauf der Transportkette (20; 20') abstoppt (Stopp-Position) und zugleich eine Anschlagkante (44c) sich am Anschlag (45; 47; 48) anlegt, wenn ein Mitnehmer (20a) mit der Quernut (13) einer auf dem Transporttisch (24) befindlichen Spritzgießform (S, S') fluchtet und wenn die Spritzgießform (S, S') ihre Vorwärm-Position auf dem Wechseltisch (19) erreicht hat.

11. Formschließeinheit nach Patentanspruch 9 oder 10, dadurch gekennzeichnet, daß in Abhängigkeit von der Verschiebung des Wechseltisches (19) arbeitende Nockensteuerungen (Fig. 11, 12) zur zeitgerechten Verschiebung der Anschläge (47; 48) in und außer Arbeitsposition vorgesehen sind.

12. Formschließeinheit nach einem der Patentansprüche 9 bis 11, dadurch gekennzeichnet, daß die der Arbeitsposition der Spritzgießform (S, S') entsprechende Stopp-Position (Fig. 9) durch Anlage der Spritzgießform (S; S') an einem stationären Anschlag (16 in Fig. 5) gesichert ist und daß die Transportkette (20; 20') in einer für die Kupplung des Auswerfers der Spritzgießform (S; S') erforderlichen Stopp-Position mittels Stoppschalter (50) ohne Anlagesicherung abstoppbar ist.

13. Formschließeinheit nach einem der Patentansprüche 9 bis 12, dadurch gekennzeichnet, daß die den Wechseltisch (19) vertikal durchsetzenden Stoppschalter (46, 49) von den Steuerlappen (44a, 44b) induktiv schaltbar sind.

14. Formschließeinheit nach einem der Patentansprüche 2 bis 13, dadurch gekennzeichnet, daß die beidends offenen Quernuten (13, 13a) von rechteckigem Querschnitt sind und daß in jeder Anlageplatte (41) zwei Quernuten (13, 13a) eingebracht sind, deren gegenseitiger Abstand kürzer ist als der Transportweg der Spritzgießform (S, S') vom Wechseltisch (19) in Arbeitsposition.

15. Formschließeinheit nach einem der vorhergehenden Patentansprüche, dadurch gekennzeichnet, daß die je anlageseitig mit einer thermischen Isolierplatte (42) armierten Anlageplatten (41) mit Hilfe der Zentrierbolzen (43) der Spritzgießform (S, S') am Gießformkörper (40) befesigt sind.

16. Formschließeinheit nach einem der vorhergehenden Patentansprüche, dadurch gekennzeichnet, daß ihr ein Satz von Spritzgießformen unterschliedlicher Größe zugeordnet ist und daß die Gießformkörper (40) dieser Spritzgießformen (S, S'), welche eine entsprechend unterschiedliche Größe aufweisen, mit Anlageplatten (41) gleicher größe versehen sind.

## Claims

1. Horizontal mould-closing unit for a plastics material injection-moulding machine, having an automatic mould-exchanging device and an associated injection-mould assembly (S; S'), having a mould body which is formed from standardised plates and is defined by a respective back plate at each clamping side thereof, said plate protruding beyond the frontal sides of the mould body, and having coupling means at the underside of the injection-mould assembly, as well as having a mouldexchanging table, which is displaceable in the closing direction at least by an amount corresponding to the height of one mould in guide means towards both sides at each end of the lateral extension of the mould-clamping space of the mould-closing unit and has two emplacements (A; B), from which table the injection mould assembly, which is preheatable on one of these emplacements (A; B) in a preheating position, is displaceable along a conveying path into the mould-clamping space by means of an endless conveyor chain, which co-operates with said assembly from below via the coupling means, characterised in that two conveyor chains (20; 20'), each with a driving end sprocket (21a) and an idling end sprocket (26), are mounted on the mould-exchanging table (19) in such a manner that they extend substantially symmetrically at either side of the longitudinal axis (symmetry plane s-s) of the mould-exchanging table (19), which axis extends in the closing direction of the mould-closing unit, and the conveyor chains define the two emplacements (A, B) on one and the same side, and coupling means (transverse grooves (13; 13a) are provided in at least one back plate (41) in the portion protruding beyond the frontal side of the mould body (40), with which coupling means carriers (20a, 20a') of the conveyor chains (20; 20') are simultaneously in coupling engagement when the injection mould assembly (S; S') is drawn into the preheating position, a conveyor table (27) being associated with the mould-exchanging device and being guidable parallel to the closing direction, and the back plates (41) protruding into the region of the conveyor chain (20, 20') for a coupling engagement of the carrier (20a, 20a') when the injection mould assembly (S, S') is in the clamping space.

2. Mould-closing unit according to claim 1, characterised in that the two identical conveyor chains (20; 20') are provided for the emplacements (A, B) of the mould-exchanging table (19) and protrude beyond the longitudinal ends of said table, the back plates (41) protruding beyond the frontal sides of the mould body (40) at each end and being provided with a respective transverse groove (13; 13a) which is disposed in the direct vicinity of their two vertical frontal edges (41e, 41f).

3. Mould-closing unit according to claim 1, characterised in that the end sprockets (21a; 26), which rotate with a vertical axis, of the conveyor chains (20; 20'), which are each provided with two mould-carrier elements (20a), are each situated outside the outline of the mould-changing table (19).

4. Mould-closing unit according to one of the preceding claims, characterised in that the distance between the transverse grooves (13; 13a) in one back plate (41) is less than the length of a conveying path required for transferring the injection-mould assembly (S; S') from the mould-changing table (19) to a working position.

5. Mould-closing unit according to one of the preceding claims, characterised by the width of the mould-changing table (19) and the length of the back plates (41) being so dimensioned that the rear transverse grooves (13a) in one injection-mould assembly (S; S'), adapted to the emplacement (A; B), are situated just within the outline of the mould-changing table (19), and the front transverse grooves (13) are situated just outside said outline.

6. Mould-closing unit according to one of the preceding claims 2 - 5, characterised in that the axes of the idling end sprockets (26) of the conveyor chains (20; 20') and the rear transverse grooves (13a) in the injection-mould assembly (S in Fig. 3), which is in a working position in the mould-clamping space, are situated substantially in a common plane (b - b) extending parallel to the closing direction of the mould-closing unit.

7. Mould-closing unit according to one of the preceding claims, characterised in that the conveyor table (27) is provided with two emplacements, and the front transverse grooves (13) in one injection-mould assembly (S'), which is adapted to the left emplacement of the conveyor table (27), lie substantially in a common plane (c - c) with the axes of the driving end sprockets (21a) (Fig. 3).

8. Mould-closing unit according to one of the preceding claims, characterised in that the pin-like carriers (20a; 20a') of the conveyor chains (20, 20'), which are formed of chain links, are formed by elongated link pins, which are each situated in the entrance portion (13d in Fig. 4) of a transverse groove (13, 13a) with coupling engagement therewith.

9. Mould-closing unit according to one of the preceding claims, characterised in that the travel effected by the conveyor chains (20, 20') is controllable by means of a control element (44), which is mounted thereon and is provided with switching tabs (44a, 44b), which permit stop switches (46; 49; 50; 51) of the mould-changing table (19) to be actuated, and with abutment edges (44c), which are abuttable against stops (45; 47; 48) of the mould-changing table for determining accurate stop positions for the conveyor chain (20, 20').

10. Mould-closing unit according to claim 9, characterised by the stop switches (46; 49) and the stops (45; 47; 48) being so disposed that a switching tab (44a, 44b) stops the travel effected by the conveyor chain (20; 20') via a stop switch (46; 49) (stop position), and simultaneously an abutment edge (44c) abuts the stop (45; 47, 48) when a carrier (20a) arrives flush with the transverse groove (13) in an injection-mould assembly (S, S'), positioned on the conveyor table (24), and when the injection-mould assembly (S, S') has reached its preheating position on the mould-changing table (19).

11. Mould-closing unit according to claim 9 or 10, characterised in that cam control means (Figs. 11, 12), which operate as a function of the displacement of the mould-changing table (19), are provided for the correctly timed displacement of the stops (47; 48) into operative and inoperative positions.

12. Mould-closing unit according to one of claims 9 to 11, characterised in that the stop position (Fig.9), corresponding to the working position of the injection-mould assembly (S, S'), is ensured as a result of the injection-mould assembly (S, S') abutting a stationary stop (16 in Fig. 5), and the conveyor chain (20; 20') is stoppable in a stop position, which is required for coupling the ejector of the injection-mould assembly (S; S') by means of stop switches (50) without positive abutment.

13. Mould-closing unit according to one of claims 9 to 12, characterised in that the stop switches (46, 49), which extend vertically through the mould-changing table (19), are inductively switchable by the switching tabs (44a, 44b).

14. Mould-closing unit according to one of claims 2 to 13, characterised in that the transverse grooves (13, 13a), which are open at both ends, are of a rectangular cross-sectional shape, and two transverse grooves (13, 13a) are provided in each back plate (41), the distance between said grooves being less than the length of a conveying path of the injection-mould assembly (S, S') from the mould-changing table (19) to a working position.

15. Mould-closing unit according to one of the preceding claims, characterised in that the back plates (41), which are each reinforced with a thermal insulating plate (42) at the abutment end, are mounted on the mould body (40) by means of the centering pins (4) injection-mould assembly (S, S').

16. Mould-closing unit according to one of the preceding claims, characterised in that it has associated therewith a set of injection-mould assemblies of different sizes, and the mould bodies (40) of these injection-mould assemblies (S, S'), which are accordingly of different sizes, are provided with back plates (41) of identical size.

## Revendications

1. Dispositif horizontal de fermeture de moules d'une machine de moulage de matières plastiques par injection, présentant un dispositif de remplacement automatique des moules, ainsi qu'un moule associé (S ; S') de coulée par injection, avec un corps de moulage composé de plaques normalisées et délimité, côté serrage, par une plaque d'appui respective qui déborde des faces extrêmes du corps de moulage, et des organes d'accouplement à la face inférieure du moule de coulée par injection, ainsi qu'un plateau de remplacement comprenant deux zones réceptrices (A ; B) qui peut coulisser vers les deux côtés, dans des guides, d'au moins une hauteur de moule, dans la direction de fermeture, de part et d'autre du prolongement latéral du compartiment de serrage des moules du dispositif de fermeture de moules, et à partir duquel le moule de coulée par injection, pouvant être préchauffé dans une position de préchauffage sur l'une de ces zones réceptrices (A ; B), peut être introduit dans le compartiment de serrage des moules, sur une piste de transport, à l'aide d'une chaîne transporteuse sans fin venant en prise par-dessous avec ledit moule, par l'intermédiaire des organes d'accouplement, caractérisé par le fait que deux chaînes transporteuses (20 ; 20'), munies chacune d'un pignon menant (21a) à chaîne et d'un pignon passif (26) à chaîne, occupent sur le plateau de remplacement (19) une position telle qu'elles s'étendent à peu près symétriquement, de part et d'autre de l'axe longitudinal (plan de symétrie s-s) du plateau de remplacement (19), formé dans la direction de fermeture du dispositif de fermeture de moules, et délimitent les deux zones réceptrices (A ; B) sur un même côté respectif ; et par le fait que des organes d'accouplement (rainures transversales 13 ; 13a) sont disposés sur au moins une plaque d'appui (41), dans la région saillant au-delà de la face extrême du corps de moulage (40), organes d'accouplement avec lesquels des entraîneurs (20a, 20a') des chaînes transporteuses (20 ; 20') sont simultanément en prise d'accouplement lorsque le moule (S ; S') de coulée par injection est tiré à la position de préchauffage, un plateau de transport (27), mobile parallèlement à la direction de fermeture, étant associé au dispositif de remplacement des moules, et les plaques d'appui (41) s'engageant dans la région de la chaîne transporteuse (20, 20'), lorsque le moule (S, S') de coulée par injection se trouve dans le compartiment de serrage, en vue d'une venue en prise d'accouplement de l'entraîneur (20a, 20a').

2. Dispositif de fermeture de moules, selon la revendication 1, caractérisé par le fait que deux chaînes transporteuses identiques (20 ; 20'), dépassant des côtés longitudinaux du plateau de remplacement (19), sont disposées pour les zones réceptrices (A ; B) dudit plateau, les plaques d'appui (41), débordant de part et d'autre des faces extrêmes du corps de moulage (40), étant pourvues d'une rainure transversale respective (13 ; 13a) située à proximité directe de leurs deux arêtes extrêmes verticales (41e, 41f).

3. Dispositif de fermeture de moules, selon la revendication 1, caractérisé par le fait que les pignons (21a ; 26) à chaîne, à rotation sur un axe vertical, des chaînes transporteuses (20 ; 20') munies chacune de deux entraîneurs (20a), sont respectivement disposés à l'extérieur de la surface de base du plateau de remplacement (19).

4. Dispositif de fermeture de moules, selon l'une des revendications précédentes, caractérisé par le fait que la distance, entre les rainures transversales (13 ; 13a) d'une plaque d'appui (41), est plus petite que le trajet de transport nécessaire au transfert du moule (S ; S') de coulée par injection, du plateau de remplacement (19) à la position de travail.

5. Dispositif de fermeture de moules, selon l'une des revendications précédentes, caractérisé par le fait que la largeur du plateau de remplacement (19) et la longueur des plaques d'appui (41) présentent un dimensionnement tel que les rainures transversales postérieures (13a) d'un moule (S ; S') de coulée par injection, déposé sur la zone réceptrice (A ; B), se trouvent encore précisément à l'intérieur de la surface de base du plateau de remplacement (19), et que les rainures transversales antérieures (13) se trouvent encore précisément à l'extérieur de cette surface de base.

6. Dispositif de fermeture de moules, selon l'une des revendications précédentes 2-5, caractérisé par le fait que les axes des pignons (26) à chaîne des chaînes transporteuses (20 ; 20'), tournant passivement, et les rainures transversales postérieures (13a) du moule (S sur la figure 3) de coulée par injection, occupant une position de travail dans le compartiment de serrage des moules, se trouvent sensiblement dans un plan commun (b-b) s'étendant parallèlement à la direction de fermeture du dispositif de fermeture de moules.

7. Dispositif de fermeture de moules, selon l'une des revendications précédentes, caractérisé par le fait que le plateau de transport (27) est doté de deux zones réceptrices ; et par le fait que les rainures transversales antérieures (13) d'un moule (S') de coulée par injection, déposé sur la zone réceptrice de gauche du plateau de transport (27), se trouvent sensiblement dans un plan (c-c) commun avec les axes des pignons menants (21a) à chaîne (figure 3).

8. Dispositif de fermeture de moules, selon l'une des revendications précédentes, caractérisé par le fait que les entraîneurs (20a ; 20a'), en forme de tenons, des chaînes transporteuses (20, 20') réalisées sous la forme de chaînes articulées, sont constitués par des tourillons prolongés qui se trouvent respectivement, en prise d'accouplement, dans le tronçon d'entrée (13d sur la figure 4) d'une rainure transversale (13, 13a).

9. Dispositif de fermeture de moules, selon l'une des revendications précédentes, caractérisé par le fait que le défilement des chaînes transporteuses (20, 20') peut être commandé au moyen d'un élément de commutation (44) fixé auxdites chaînes, par les lobes de commande (44a, 44b) duquel des interrupteurs d'arrêt (46 ; 49 ; 50 ; 51) du plateau de remplacement (19) peuvent être actionnés, et dont les arêtes de butée (44c) peuvent être appliquées contre des butées (45 ; 47 ; 48) du plateau de remplacement, en vue de la consignation précise des positions d'arrêt de la chaîne transporteuse (20, 20').

10. Dispositif de fermeture de moules, selon la revendication 9, caractérisé par le fait que les interrupteurs d'arrêt (46 ; 49) et les butées (45 ; 47 ; 48) sont agencés de telle sorte qu'un lobe de commutation (44a, 44b) interrompe (position d'arrêt) le défilement de la chaîne transporteuse (20 ; 20') par l'intermédiaire d'un interrupteur d'arrêt (46 ; 49), et qu'une arête de butée (44c) vienne simultanément s'appliquer contre la butée (45 ; 47 ; 48) lorsqu'un entraîneur (20a) coïncide avec la rainure transversale (13) d'un moule (S, S') de coulée par injection, situé sur le plateau de transport (27), et lorsque le moule (S, S') de coulée par injection a atteint sa position de préchauffage sur le plateau de remplacement (19).

11. Dispositif de fermeture de moules, selon la revendication 9 ou 10, caractérisé par le fait que des commandes par cames (figures 11, 12), agissant en fonction du coulissement du plateau de remplacement (19), sont prévues pour faire coulisser les butées (47 ; 48) en temps utile à la position de travail, et hors de cette dernière.

12. Dispositif de fermeture de moules, selon l'une des revendications 9 à 11, caractérisé par le fait que la position d'arrêt (figure 9), correspondant à la position de travail du moule (S, S') de coulée par injection, est assurée par application dudit moule (S ; S') de coulée par injection contre une butée fixe (16 sur la figure 5) ; et par le fait que la chaîne transporteuse (20 ; 20') peut être immobilisée au moyen d'interrupteurs d'arrêt (50), sans verrouillage de contact, dans une position d'arrêt nécessaire à l'accouplement de l'éjecteur du moule (S ; S') de coulée par injection.

13. Dispositif de fermeture de moules, selon l'une des revendications 9 à 12, caractérisé par le fait que les interrupteurs d'arrêt (46, 49), traversant verticalement le plateau de remplacement (19), peuvent être commutés inductivement par les lobes de commande (44a, 44b).

14. Dispositif de fermeture de moules, selon l'une des revendications 2 à 13, caractérisé par le fait que les rainures transversales (13, 13a), ouvertes de part et d'autre, sont de section transversale rectangulaire ; et par le fait que deux rainures transversales (13, 13a) sont pratiquées dans chaque plaque d'appui (41), rainures dont l'espacement mutuel est plus court que le trajet de transport du moule (S, S') de coulée par injection, du plateau de remplacement (19) à la position de travail.

15. Dispositif de fermeture de moules, selon l'une des revendications précédentes, caractérisé par le fait que les plaques d'appui (41), renforcées côté contact par une plaque respective (42) d'isolation thermique, sont fixées au corps de moulage (40) à l'aide des chevilles de centrage (43) du moule (S, S') de coulée par injection.

16. Dispositif de fermeture de moules, selon l'une des revendications précédentes, caractérisé par le fait qu'un jeu de moules de coulée par injection de tailles différentes lui est associé ; et par le fait que les corps de moulage (40) de ces moules (S, S') de coulée par injection, qui présentent des tailles conséquemment différentes, sont pourvus de plaques d'appui (41) de taille identique.
